# EUROPÄISCHE PATENTSCHRIFT

(11) **EP 4 194 712 B1**
(45) Veröffentlichungstag und Bekanntmachung des Hinweises auf die Patenterteilung: **24.06.2026**
(21) Anmeldenummer: 22212480.2
(22) Anmeldetag: 09.12.2022
(51) Int. Cl.: F16D 41/32

(54) **NABE, INSBESONDERE FÜR FAHRRÄDER, MIT FREILAUFMECHANISMUS**
HUB, IN PARTICULAR FOR BICYCLES, WITH FREEWHEEL MECHANISM
MOYEU, EN PARTICULIER POUR BICYCLETTES, AVEC MÉCANISME DE ROUE LIBRE

(30) Priorität: 10.12.2021 DE 102021132705
(43) Veröffentlichungstag der Anmeldung: 14.06.2023
(73) Patentinhaber: Elsner, Ingo, 01277 Dresden (DE)
(72) Erfinder: Elsner, Roman, 01097 Dresden (DE); Jyrch, Alfred, 01129 Dresden (DE)
(74) Vertreter: Lippert Stachow Patentanwälte Rechtsanwälte Partnerschaft mbB

(56) Entgegenhaltungen:
- CN-A- 104 455 078
- DE-A1- 102019 000 511
- DE-A1- 19 847 673
- TW-A- 202 000 490
- TW-B- I 656 986

## Beschreibung

Die Erfindung betrifft eine Nabe, insbesondere für Fahrräder, mit einem Freilaufmechanismus. Außer bei Fahrrädern kann die Nabe auch für andere Anwendungszwecke vorgesehen sein, z. B. bei allen Arten von Anhängern, insbesondere Fahrradanhängern, bei Rollstühlen und dergleichen.

Naben der hier in Rede stehenden Art dienen zur Verbindung der feststehenden Radachse mit einer um diese Achse rotierenden Felge, die einen Luftreifen trägt. Die Verbindung zwischen der Nabe und der Felge ist meist durch Speichen aus Stahl, Aluminium, Carbon oder anderen Textilien realisiert, die nach einem vorgegebenen Muster angeordnet und an jedem ihrer beiden Enden in je einer dafür vorgesehenen Bohrung der Nabe und der Felge gehalten sind.

Insbesondere bei Rädern, die im sportlichen Bereich eingesetzt werden, und ganz besonders bei Rädern für den Einsatz bei Wettkämpfen, werden an die Nabe hohe Anforderungen gestellt. Die Nabe soll einerseits mit möglichst geringem Reibungswiderstand drehen, andererseits soll sie eine weitgehend spielfreie Abstützung ermöglichen, nur in geringem Maße verschmutzen und verschleißen und leicht zu montieren und demontieren sein.

Üblicherweise wird bei einem Fahrrad das Hinterrad angetrieben. Dazu ist neben dem eigentlichen Nabengehäuse auf der Achse der Hinterradnabe ein Freilaufkörper angeordnet, auf welchem ein einzelnes Kettenritzel oder eine mehrere Kettenritzel umfassende sogenannte Kassette fest angebracht sind, um das vom Fahrer an den Tretkurbeln erzeugte Antriebsmoment mittels einer Rollenkette, eines Riemens oder einer Kardanwelle auf das Hinterrad zu übertragen.

Damit die Tretkurbeln nicht ständig mitdrehen müssen, beispielsweise bei einer Bergabfahrt oder während einer Tretpause, weist die Hinterradnabe der meisten Fahrräder einen Freilaufmechanismus auf, welcher Antriebskraft des Antreibers oder Freilaufkörpers von dem Freilaufkörper auf das Nabengehäuse und somit das Hinterrad überträgt, während beim Rückwärtstreten der Freilauf bewirkt, dass das Nabengehäuse und der Freilaufkörper sich gegeneinander drehen können.

Nach aktuellem Stand der Technik erfolgt die Drehmomentübertragung bei Freilaufnaben mit Zahnscheibenfreilauf mittels zweier ringförmiger Zahnscheiben und einer Kupplungsschnittstelle. Die Zahnscheiben weisen dabei auf ihren einander zugewandten Stirnflächen je eine Sägezahn-Verzahnung auf, die bei einer Relativverdrehung in einer Drehrichtung ineinander verhaken und so durch Formschluss die Drehmomentübertragung ermöglichen, während sie in der entgegengesetzten Drehrichtung aneinander abgleiten, so dass kein Drehmoment übertragen wird, wobei jedoch der axiale Abstand der beiden Zahnscheiben größer wird.

Alternative Ausführungen verwenden eine Paarung einer Zahnscheibe mit einer Sägezahn-Verzahnung und einer Lochscheibe mit Löchern, in die die Sägezähne in einer Drehrichtung formschlüssig eingreifen.

Eine Sägezahn-Verzahnung kann dabei eben oder uneben sein, sie kann kegel-, spiral- gerad- oder schrägverzahnt oder eine Mischform sein.

Das deutsche Gebrauchsmuster G 94 19 357.6 U1 beschreibt eine Freilaufnabe für ein Zweirad mit einer Radachse, auf der drehbar ein Nabenkörper und axial daran anschließend ein Freilaufkörper angeordnet ist, wobei der Nabenkörper und der Freilaufkörper über einen Freilaufmechanismus gekoppelt sind, welcher nur für eine Drehrichtung eine drehfeste Verbindung zwischen Freilaufkörper und Nabenkörper bildet, und wobei der Freilaufkörper mit der Radachse über zwei Kugellager in Verbindung steht, wobei ein lösbares Sicherungsmittel vorgesehen ist, mit dem der Freilaufkörper gegen den Nabenkörper drängbar ist, und wobei bei gelöstem Sicherungsmittel der Freilaufkörper ohne Kraftaufwand in axialer Richtung vom Nabenkörper weg abziehbar ist.

Aus DE 198 47 673 A1 ist eine Nabe, insbesondere für Fahrräder und dergleichen bekannt mit einer Nabenachse, einem konzentrisch zu dieser Nabenachse angeordnetem Nabengehäuse, wenigstens einer Lagereinrichtung, welche wenigstens zwei Lager beinhaltet, und welche zwischen dieser Nabenachse und diesem Nabengehäuse angeordnet ist, so dass dieses Nabengehäuse drehbar in Bezug auf diese Nabenachse gelagert ist, einem in Bezug auf diese Nabenachse drehbar gelagerten Freilaufkörper, welcher derart gestaltet ist, dass an diesem Freilaufkörper wenigstens ein Zahnrad anzuordnen ist, einer Freilaufeinrichtung, welche zwischen diesem Freilaufkörper und diesem Nabengehäuse angeordnet ist, und welche zwei Zahnscheiben aufweist, deren Zahnflächen durch eine Vorspanneinrichtung aufeinander gedrückt werden, wobei diese zwei Zahnscheiben konzentrisch zu dieser Nabenachse angeordnet sind und im bestimmungsgemäßen Zusammenbau dieser Nabe wenigstens im Ruhezustand in einer Ebene senkrecht zu einer Achsenlinie dieser Nabenachse angeordnet sind, und wobei diese Zahnscheiben schwimmend gehalten werden, so dass eine Verkippung in Bezug auf diese Ebene senkrecht zu dieser Achsenlinie dieser Nabenachse möglich ist.

DE 10 2019 000 511 A1 offenbart eine Fahrradnabe mit im Leerlauf an den Sperrklinkenflächen erzieltem Freigabeeffekt, bei der die Freilauffunktion ebenfalls durch eine Paarung zweier asymmetrischer Sägezahn-Verzahnungen realisiert ist, die in einer Drehrichtung einer Relativverdrehung eine Drehmomentübertragung ermöglichen und in der anderen Drehrichtung einer Relativverdrehung aneinander abgleiten. Eine dieser Sägezahn-Verzahnungen ist auf der Stirnseite einer drehfest mit dem Nabengehäuse verbundenen ersten Zahnscheibe und die andere auf einer Stirnfläche einer axial verschiebbaren, drehfest mit dem Freilaufkörper verbundenen zweiten Zahnscheibe angeordnet. Auf der anderen Stirnfläche der zweiten Zahnscheibe ist eine symmetrische Kerbverzahnung angeordnet. Diese Kerbverzahnung wiederum wirkt mit einer weiteren symmetrischen Kerbverzahnung zusammen, die auf der Stirnseite einer axial verschiebbaren, drehfest auf der Achse angeordneten sogenannten Drückscheibe angeordnet ist; wobei die Zahnflanken der beiden Kerbverzahnungen in beiden Drehrichtungen einer Relativverdrehung aneinander abgleiten. Zwei in entgegengesetzter axialer Richtung wirkende Federelemente sorgen im Zusammenspiel mit den beiden symmetrischen Kerbverzahnungen, die eine Relativverdrehung in eine axiale Verschiebung umformen, dafür, dass die Sägezahn-Verzahnungen der ersten Zahnscheibe und der zweiten Zahnscheibe nur bei Vorwärtsbewegung der Tretkurbeln im Eingriff sind, um das Laufrad vorwärts zu bewegen, und bei Stillstand der Tretkurbeln sowie bei einer Rückwärtsbewegung der Tretkurbeln außer Eingriff gelangen, so dass Reibung und Verschleiß der Sägezahn-Verzahnungen unterbunden werden.

TW 202 000 409 A offenbart eine Fahrradnabenstruktur, die eine Nabe, einen Ratschensatz und einen Antriebssitz umfasst, wobei die erste und zweite Zahnscheibe des Ratschensatzes auf beiden Seiten mit ineinandergreifenden rechten Zähnen und linken Zähnen versehen sind, so dass die Nabe so konfiguriert werden kann, dass das Antriebskettenblatt auf der rechten oder linken Seite der Fahrradpedalkurbel installiert werden kann, und der Antriebssitz relativ auf der rechten oder linken Seite der Nabe installiert ist, indem die Zähne der ersten und zweiten Zahnscheibe auf der rechten Seite oder auf der linken Seite ineinandergreifen und verriegelt sind, um den Antriebssitz des Antriebskettenblattes links oder rechts anzuordnen.

Es besteht ein Bedarf an einem verbesserten, hoch belastbaren und verschleißarmen Freilaufmechanismus für Fahrradnaben, welcher der formschlüssigen Übertragung des Antriebsmoments dient und eine Unabhängigkeit von An- und Abtrieb ermöglichen, sobald die Abtriebsdrehzahl höher ist als die Antriebsdrehzahl.

Die Anzahl der Sägezähne ist bestimmend dafür, wie groß der Leerlaufwinkel ist, um den sich die eine Zahnscheibe relativ zu der anderen Zahnscheibe verdrehen muss, bevor die beiden Sägezahn-Verzahnungen miteinander in Eingriff gelangen und eine Drehmomentübertragung möglich ist. Es liegt auf der Hand, dass dieser Leerlaufwinkel möglichst klein sein sollte. Dafür müssen die Sägezahn-Verzahnungen möglichst viele Sägezähne aufweisen. Der Zielkonflikt liegt hierbei in der Tatsache, dass die Eingriffsfläche jeder Zahnpaarung abnimmt, je mehr Sägezähne über den Umfang einer Zahnscheibe verteilt werden, was zu einem geringeren übertragbaren Drehmoment sowie zu geringerer Haltbarkeit durch erhöhten Verschleiß führt.

Eine Aufgabe der vorliegenden Erfindung besteht daher darin, eine verbesserte Nabe, insbesondere für Fahrräder, anzugeben, die einen Freilaufmechanismus aufweist, der bei möglichst geringem Leerlaufwinkel eine möglichst große Eingriffsfläche zur Drehmomentübertragung bereitstellt, der wartungsarm und haltbar ist.

Diese Aufgabe wird gelöst durch eine Nabe mit den Merkmalen des unabhängigen Anspruchs 1. Vorteilhafte Ausgestaltungen und Weiterbildungen sind in den abhängigen Ansprüchen beschrieben und erläutert.

Soweit dabei nachfolgend von einer Paarung miteinander im Eingriff stehender Sägezahn-Verzahnungen axial benachbarter Zahnscheiben gesprochen wird, soll darunter auch eine Paarung einer Zahnscheibe mit einer Sägezahn-Verzahnung und einer Lochscheibe mit Löchern, in die die Sägezähne nur in einer Drehrichtung formschlüssig und drehmomentübertragend eingreifen, verstanden werden. Bei dieser Variante gleiten die Sägezähne in der entgegengesetzten Drehrichtung an den Kanten der Löcher ab. Die Löcher erfüllen insoweit dieselbe Funktion wie eine zweite Sägezahn-Verzahnung. Diese Variante, die ausdrücklich mit vom Schutz umfasst sein soll, hat den zusätzlichen Vorteil, dass Material und damit Gewicht gespart werden kann und weniger Bauraum benötigt wird.

Bei einer Nabe, insbesondere für Fahrräder, die eine Achse, auf der ein Nabenkörper und ein Freilaufkörper jeweils drehbar angeordnet sind, wobei der Nabenkörper und der Freilaufkörper durch einen Freilaufmechanismus miteinander gekoppelt sind, welcher auf einer Paarung miteinander im Eingriff stehender Sägezahn-Verzahnungen axial benachbarter Zahnscheiben beruht und dadurch für eine Drehrichtung eine drehfeste Verbindung zwischen Freilaufkörper und Nabenkörper bildet, werden erfindungsgemäß mindestens zwei Paarungen zusammenwirkender Sägezahn-Verzahnungen vorgesehen.

Durch die Verwendung von zwei oder mehr Paarungen zusammenwirkender Sägezahn-Verzahnungen kann gegenüber der herkömmlichen Verwendung einer einzelnen Paarung zusammenwirkender Sägezahn-Verzahnungen ohne jegliche weitere Maßnahmen sofort eine Verdoppelung der Eingriffsfläche erzielt werden, wodurch das übertragbare Drehmoment sich ebenfalls verdoppelt und der Verschleiß außerordentlich stark minimiert wird.

In einer einfachen Ausführung können mehrere Paarungen von Sägezahn-Verzahnungen dadurch erzeugt werden, dass doppelt so viele Zahnscheiben verwendet werden wie Paarungen vorhanden sein sollen. So wäre es beispielsweise möglich, zwei Paarungen durch die Verwendung von vier Zahnscheiben, drei Paarungen durch Verwendung von sechs Zahnscheiben usw. zu erzeugen. Dabei könnte weiterhin vorgesehen sein, dass die zusammenwirkenden Zahnscheiben einer Sägezahn-Verzahnung gegenüber den zusammenwirkenden Zahnscheiben einer Sägezahn-Verzahnung relativ zueinander so verdreht sind, dass die Sägezahn-Verzahnungen relativ zueinander phasenverschoben sind, d.h. dass die Zähne einer Paarung jeweils zwischen zwei Zähnen einer anderen Paarung angeordnet sind. Auf diese Weise kann die Anzahl der Rastpunkte, an denen über eine volle Umdrehung eine Paarung zusammenwirkender Sägezahn-Verzahnungen in Eingriff kommt, auf einfachste Weise verdoppelt, verdreifacht usw. werden.

Gemäß einer vorteilhaften Ausgestaltung kann zur Vereinfachung des konstruktiven Aufbaus der vorgeschlagenen Nabe vorgesehen sein, dass eine Anordnung von drei Zahnscheiben zwei äußere Zahnscheiben und eine zwischen den äußeren Zahnscheiben angeordnete mittlere Zahnscheibe umfasst, wobei die mittlere Zahnscheibe auf jeder ihrer beiden Stirnseiten eine Sägezahn-Verzahnung aufweist und jede dieser beiden Sägezahn-Verzahnungen mit einer korrespondierenden Sägezahn-Verzahnung einer der beiden äußeren Zahnscheiben zusammenwirkt. Mit anderen Worten kann der gleiche Effekt wie oben beschrieben mit weniger Zahnscheiben erreicht werden: zwei Paarungen mit drei Zahnscheiben, drei Paarungen mit vier Zahnscheiben usw.

In der obigen Ausgestaltung mit drei Zahnscheiben kann beispielsweise vorgesehen sein, dass die mittlere Zahnscheibe drehfest mit dem Nabenkörper verbunden ist und die beiden äußeren Zahnscheiben drehfest mit dem Freilaufkörper verbunden sind. Alternativ kann vorgesehen sein, dass die mittlere Zahnscheibe drehfest mit dem Freilaufkörper verbunden ist und die beiden äußeren Zahnscheiben drehfest mit dem Nabenkörper verbunden sind.

Weiterhin kann bei der obigen Ausgestaltung mit drei Zahnscheiben beispielsweise vorgesehen sein, dass die beiden Sägezahn-Verzahnungen der mittleren Zahnscheibe relativ zueinander phasenverschoben sind. Damit wird bei Reduzierung der Anzahl verwendeter Zahnscheiben dennoch der oben bereits beschriebene Effekt erreicht, dass der Leerlaufwinkel bei gleichbleibender Eingriffsfläche verringert wird. Je nach der Gesamtzahl verwendeter Zahnscheiben und damit der erzeugten Paarungen zusammenwirkender Sägezahn-Verzahnungen kann die Eingriffsfläche sogar erhöht werden, wenn die Zähnezahl pro Sägezahn-Verzahnung herabgesetzt wird, so dass eine höhere Belastbarkeit erzielt werden kann. Durch geschickte Anwendung der Phasenverschiebung kann dennoch eine sehr hohe Zahl von Rastpunkten erzeugt werden, so dass der Leerlaufwinkel sehr klein ist.

In einer besonderen Ausgestaltung der vorgeschlagenen Nabe kann vorgesehen sein, dass mindestens zwei Paarungen zusammenwirkender Sägezahn-Verzahnungen in entgegengesetzten Wirkrichtungen eine drehfeste Verbindung zwischen Freilaufkörper und Nabenkörper bilden. Auf diese Weise ist es möglich, eine Drehmomentübertragung in beiden Drehrichtungen einer Relativverdrehung zu erreichen, entweder gleichzeitig oder bedarfsweise.

Hierfür kann in einer bevorzugten Ausgestaltung der vorgeschlagenen Nabe vorgesehen sein, dass mindestens eine Zahnscheibe zwischen zwei Positionen axial hin und her verschiebbar ist, um den Eingriff einer Paarung zusammenwirkender Sägezahn-Verzahnungen herzustellen oder zu unterbrechen. Mit anderen Worten ist es bei der vorgeschlagenen Nabe möglich, zwischen einem "Vorwärtsgang" und einem "Rückwärtsgang" hin und her zu schalten, wobei in der jeweils anderen Drehrichtung noch eine Freilauffunktion erhalten wird, oder den Freilauf vollständig auszuschalten, so dass das Laufrad in jeder Drehrichtung angetrieben wird.

Weiterhin kann es sinnvoll sein vorzusehen, dass mindestens eine Rückstellfeder in axialer Richtung auf mindestens eine Zahnscheibe wirkt. Auf diese Weise werden die zusammenwirkenden Sägezahn-Verzahnungen einer Paarung stets wieder miteinander in Eingriff gebracht, wenn ein Antriebsmoment anliegt.

Als besonders vorteilhaft hat es sich erwiesen, vorzusehen, dass der Freilaufkörper einen außerhalb des Nabenkörpers liegenden Abschnitt aufweist, der auf der Achse drehbar gelagert ist, und einen innerhalb des Nabenkörpers liegenden Abschnitt aufweist, auf dem der Nabenkörper drehbar gelagert ist. Weiterhin kann vorgesehen sein, dass die Zahnscheiben im Bereich des innerhalb des Nabenkörpers liegenden Abschnitts des Freilaufkörpers angeordnet sind. Auf diese Weise sind die empfindlichsten Komponenten des Freilaufmechanismus' platzsparend sowie vor Verschmutzung und Beschädigung geschützt im Innern des Nabenkörpers untergebracht.

Für die hier vorgeschlagene, verbesserte Freilaufnabe werden in dieser Erfindung mindestens drei Zahnscheiben vorgesehen. Diese sind konzentrisch auf der Rotationsachse der Fahrradnabe in Reihe angeordnet, wobei für die schlupffreie Kraftübertragung mindestens eine Scheibe am Nabenkörper und mindestens eine Scheibe am Freilaufkörper für die tangentiale Kraftübertragung befestigt wird. Um die Unabhängigkeit von An- und Abtrieb zu realisieren, werden an den parallelen Flächen der Scheiben Verzahnungen mit einem Sägezahnprofil vorgesehen. Diese ermöglichen, ähnlich einem Ratschenmechanismus, in eine Rotationsrichtung die formschlüssige Drehmomentübertragung, während in entgegengesetzter Rotationsrichtung eine freie Bewegung zugelassen wird. Dafür können die Zahnscheiben zueinander axial verschiebbar befestigt und über einen Federmechanismus oder anderen Spannmechanismus verspannt werden. Über die Verzahnung wird eine definierte Anzahl an Rastpunkten erzeugt.

Durch die Anordnung der mindestens drei Zahnscheiben werden mindestens zwei Paarungen zusammenwirkender Sägezahn-Verzahnungen erzeugt, die zur Drehmomentübertragung beitragen können. Es ergeben sich mehrere Möglichkeiten, die Kraftübertragung zwischen An- und Abtrieb zu beeinflussen. Zum einen kann durch jede zusätzliche Zahnscheibe die Eingriffsfläche und damit die mögliche Kraftübertragung bei gleichem radialem Bauraum erhöht werden. Des Weiteren kann bei phasenversetzter Anordnung der Zahneingriffe eine Erhöhung der Rastpunkte erzielt werden, wodurch der Leerlaufwinkel vor dem ersten Zahneingriff verringert wird.

Besonders vorteilhaft können die Scheiben schaltbar gestaltet sein, wodurch es ermöglicht wird, zwischen dauerhafter Kraftübertragung in beide Rotationsrichtungen (starrer Gang) und einem Freilauf in einer Rotationsrichtung zu wählen. Dabei sind die Zähne auf der einen Seite in Kraftrichtung angeordnet und auf der anderen Seite entgegen der Kraftrichtung.

Nachfolgend wird die Erfindung anhand eines Ausführungsbeispiels und zugehöriger Zeichnungen näher erläutert. Dabei zeigen
Fig. 1 eine Gesamtansicht der Nabe gemäß Ausführungsbeispiel,
Fig. 2 einen Axialschnitt durch das Ausführungsbeispiel,
Fig. 3 eine Explosionsdarstellung der Nabe gemäß des Ausführungsbeispiels,
Fig. 4 eine Detaildarstellung der Bestandteile des Freilaufmechanismus' des Ausführungsbeispiels.

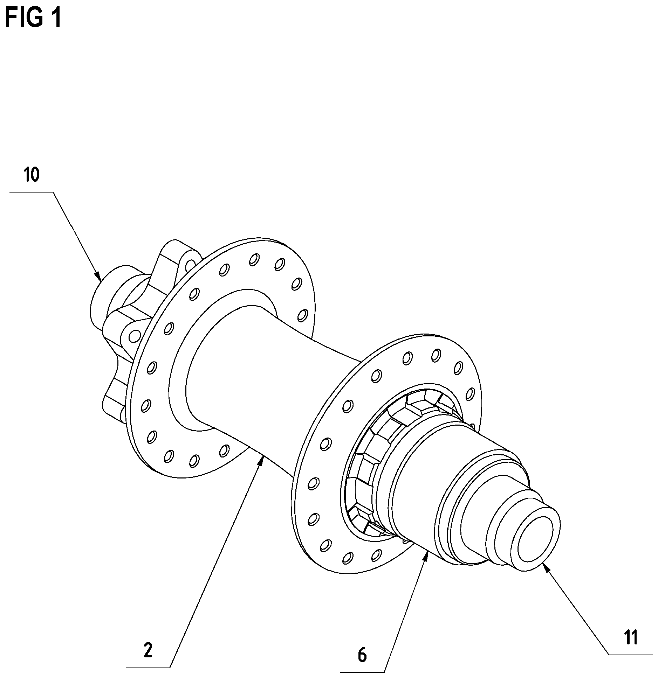

Fig. 1 zeigt die erfindungsgemäße Nabe in einer Gesamtansicht. Es ist zu erkennen, wie der Nabenkörper 2 und der Freilaufkörper 6 relativ zueinander auf der Achse 1 angeordnet sind, welche auf der Antriebsseite durch die Abdeckkappe 11 und auf der Nichtantriebsseite durch die Abdeckkappe 10 abgeschlossen ist.

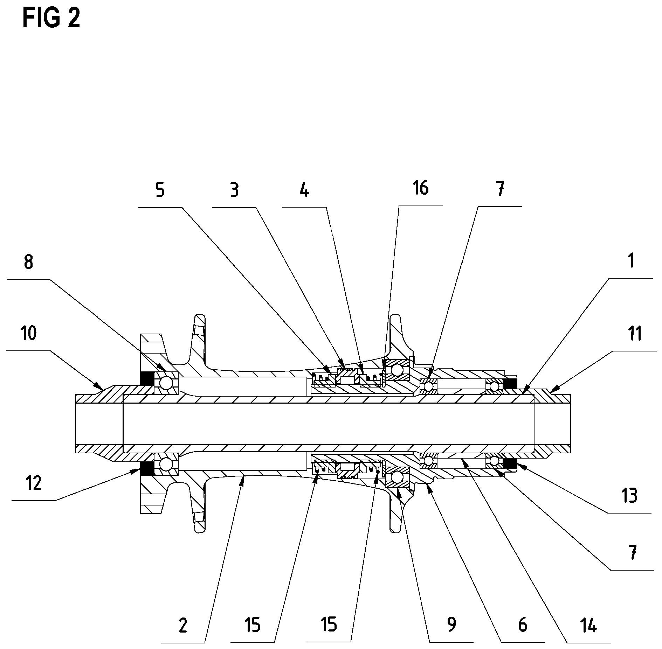

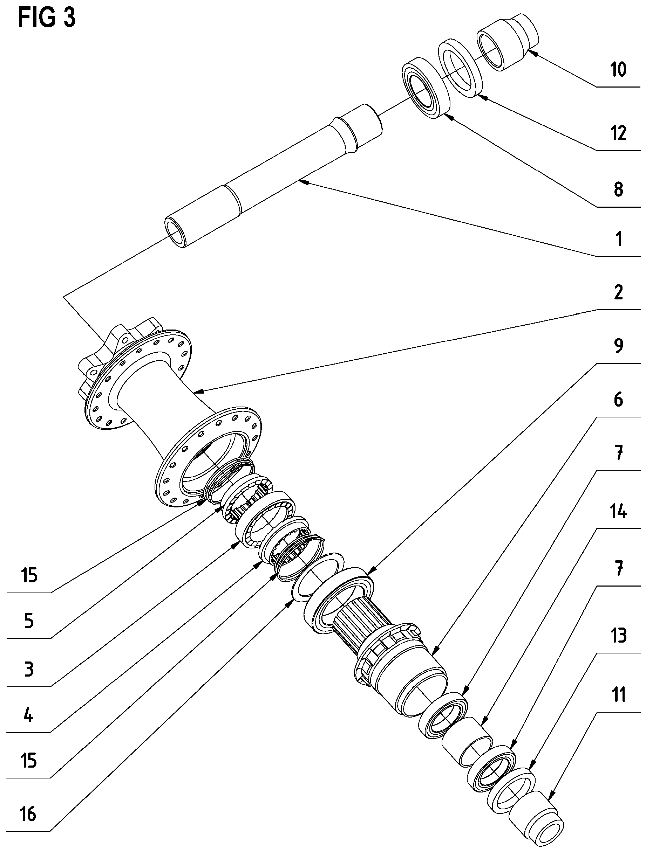

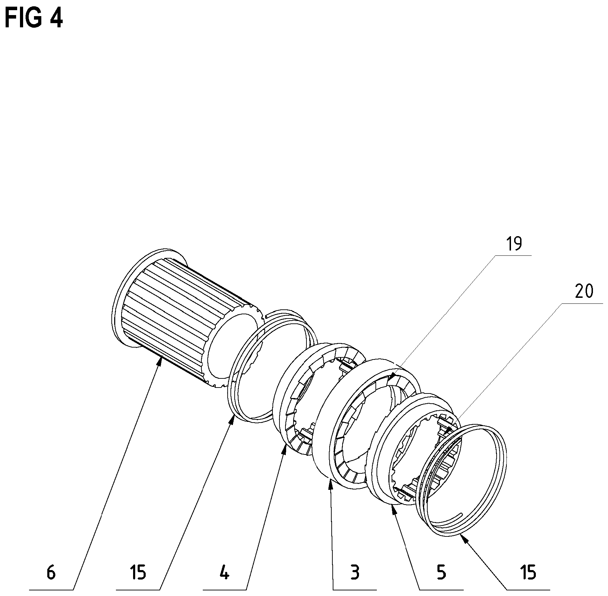

Mit Bezug auf die Fig. 2, 3 und 4 ist zu erkennen, dass die Nabe eine Achse 1 aufweist, auf der ein Nabenkörper 2 und ein Freilaufkörper 6 jeweils drehbar angeordnet sind.

Der Freilaufkörper 6 weist einen außerhalb des Nabenkörpers 2 liegenden Abschnitt, der mittels zweier Freilauflager 7 auf der Achse 1 drehbar gelagert ist, und einen innerhalb des Nabenkörpers 2 liegenden Abschnitt auf, auf dem der Nabenkörper 2 mittels eines Nabenlagers 9 drehbar gelagert ist. Auf der Nichtantriebsseite ist der Nabenkörper 2 mittels eines weiteren Nabenlagers 8 direkt auf der Achse 1 drehbar gelagert.

Der Nabenkörper 2 und der Freilaufkörper 6 sind durch einen Freilaufmechanismus miteinander gekoppelt, welcher auf einer Paarung miteinander im Eingriff stehender Sägezahn-Verzahnungen axial benachbarter Zahnscheiben beruht und dadurch für eine Drehrichtung eine drehfeste Verbindung zwischen Freilaufkörper 6 und Nabenkörper 2 bildet. Im Ausführungsbeispiel sind durch drei Zahnscheiben 3,4,5 zwei Paarungen 4-3, 5-3 zusammenwirkender Sägezahn-Verzahnungen gebildet.

Die Zahnscheiben 3,4,5 sind im Bereich des innerhalb des Nabenkörpers 2 liegenden Abschnitts des Freilaufkörpers 6 angeordnet. Die antriebsseitige äußere Zahnscheibe 4 und die nichtantriebsseitige Zahnscheibe 5 sind auf dem innerhalb des Nabenkörpers 2 liegenden Abschnitts des Freilaufkörpers 6 angeordnet und drehfest mit dem Freilaufkörper 6 verbunden. Gleichzeitig sind sie gegen die Kraft je einer Rückstellfeder 15 axial verschiebbar, um ihre stirnseitigen Sägezahn-Verzahnungen bedarfsweise mit den beiden Sägezahn-Verzahnungen der beiden Stirnseiten der mittleren Zahnscheibe 3 in Eingriff zu bringen oder daraus zu lösen. Die mittlere Zahnscheibe 3 ist axial zwischen der antriebsseitigen äußere Zahnscheibe 4 und der nichtantriebsseitigen Zahnscheibe 5 angeordnet und mit ihrem äußeren Umfang drehfest mit dem Nabenkörper 2 verbunden.

Die beiden Sägezahn-Verzahnungen der mittleren Zahnscheibe 3 sind relativ zueinander phasenverschoben, d.h. jeder Zahn der einen Sägezahn-Verzahnung ist zwischen zwei Zähnen der anderen Sägezahn-Verzahnung angeordnet. Dadurch halbiert sich der Leerlaufwinkel, der zu überwinden ist, bis der Leerlauf greift und ein Drehmoment vom Freilaufkörper 6 auf den Nabenkörper 2 übertragen wird. Anders ausgedrückt kann trotz eines sehr geringen Leerlaufwinkels des vorgeschlagenen Freilaufmechanismus' jede Sägezahn-Verzahnung einen relativ großen Winkel zwischen den einzelnen Zähnen, damit eine relativ geringe Zähnezahl und eine relativ große Eingriffsfläche für die andere Sägezahn-Verzahnung aufweisen, wodurch ein relativ hohes Drehmoment übertragbar ist und relativ geringer Verschleiß auftritt.

### Bezugszeichenliste

- 1: Achse
- 2: Nabenkörper
- 3: Mittlere zweiseitige Zahnscheibe
- 4: Äußere Zahnscheibe Antriebsseite
- 5: Äußere Zahnscheibe Nichtantriebsseite
- 6: Freilaufkörper und -welle
- 7: Freilauflager
- 8: Nabenlager Nichtantriebsseite
- 9: Nabenlager Antriebsseite
- 10: Endkappe Nichtantriebsseite
- 11: Endkappe Antriebsseite
- 12: Dichtung Nichtantriebsseite
- 13: Dichtung Antriebsseite
- 14: Distanzhülse
- 15: Rückstellfeder
- 16: Dicht- und Abdeckkappe

## Patentansprüche

1. Nabe, insbesondere für Fahrräder, umfassend eine Achse (1), auf der ein Nabenkörper (2) und ein Freilaufkörper (6) jeweils drehbar angeordnet sind, wobei der Nabenkörper (2) und der Freilaufkörper (6) durch einen Freilaufmechanismus miteinander gekoppelt sind, welcher auf einer Paarung miteinander im Eingriff stehender Sägezahn-Verzahnungen axial benachbarter Zahnscheiben beruht und dadurch für eine Drehrichtung eine drehfeste Verbindung zwischen Freilaufkörper (6) und Nabenkörper (2) bildet, **dadurch gekennzeichnet, dass** mindestens zwei Paarungen (4-3, 5-3) miteinander im Eingriff stehender Sägezahn-Verzahnungen vorgesehen sind, wobei jede Sägezahn-Verzahnung eine Gesamtheit von auf einer Stirnseite der Zahnscheibe angeordneten Sägezähne umfasst.

2. Nabe nach Anspruch 1, bei der die beiden Sägezahn-Verzahnungen einer Paarung (4-3, 5-3) relativ zueinander phasenverschoben sind, d.h. dass die Zähne einer Paarung jeweils zwischen zwei Zähnen einer anderen Paarung angeordnet sind.

3. Nabe nach Anspruch 1 oder 2, bei der eine Anordnung von drei Zahnscheiben (3,4,5) zwei äußere Zahnscheiben (4,5) und eine zwischen den äußeren Zahnscheiben (4,5) angeordnete mittlere Zahnscheibe (3) umfasst, wobei die mittlere Zahnscheibe (3) auf jeder ihrer beiden Stirnseiten eine Sägezahn-Verzahnung aufweist und jede dieser beiden Sägezahn-Verzahnungen mit einer korrespondierenden Sägezahn-Verzahnung einer der beiden äußeren Zahnscheiben (4,5) im Eingriff steht.

4. Nabe nach Anspruch 3, bei der die mittlere Zahnscheibe (3) drehfest mit dem Nabenkörper (2) verbunden ist und die beiden äußeren Zahnscheiben (4,5) drehfest mit dem Freilaufkörper (6) verbunden sind.

5. Nabe nach Anspruch 3, bei der die mittlere Zahnscheibe (3) drehfest mit dem Freilaufkörper (6) verbunden ist und die beiden äußeren Zahnscheiben (4,5) drehfest mit dem Nabenkörper (2) verbunden sind.

6. Nabe nach Anspruch 3,4 oder 5, bei der die beiden Sägezahn-Verzahnungen der mittleren Zahnscheibe (3) relativ zueinander phasenverschoben sind, d.h. dass die Zähne einer Paarung jeweils zwischen zwei Zähnen einer anderen Paarung angeordnet sind.

7. Nabe nach einem der Ansprüche 1 bis 6, bei der mindestens zwei Paarungen (4-3, 5-3) miteinander im Eingriff stehender Sägezahn-Verzahnungen in entgegengesetzten Wirkrichtungen eine drehfeste Verbindung zwischen Freilaufkörper (6) und Nabenkörper (2) bilden.

8. Nabe nach einem der Ansprüche 1 bis 7, bei der mindestens eine Zahnscheibe (3,4,5) zwischen zwei Positionen axial hin und her verschiebbar ist, um den Eingriff einer Paarung (4-3, 5-3) miteinander im Eingriff stehender Sägezahn-Verzahnungen herzustellen oder zu unterbrechen.

9. Nabe nach Anspruch 8, bei der mindestens eine Rückstellfeder (15) in axialer Richtung auf mindestens eine Zahnscheibe (3,4,5) wirkt.

10. Nabe nach einem der Ansprüche 1 bis 9, bei der der Freilaufkörper (6) einen außerhalb des Nabenkörpers (2) liegenden Abschnitt aufweist, der auf der Achse (1) drehbar gelagert ist, und einen innerhalb des Nabenkörpers (2) liegenden Abschnitt aufweist, auf dem der Nabenkörper (2) drehbar gelagert ist.

11. Nabe nach Anspruch 10, bei der die Zahnscheiben (3,4,5) im Bereich des innerhalb des Nabenkörpers (2) liegenden Abschnitts des Freilaufkörpers (6) angeordnet sind.

## Claims

1. Hub, in particular for bicycles, comprising an axle (1) on which a hub member (2) and a free-wheel member (6) are rotatably arranged, wherein the hub member (2) and the free-wheel member (6) are coupled to each other by a free-wheel mechanism which is based on a pairing of saw-tooth tooth arrangements, which are engaged with each other, of axially adjacent toothed discs and which thereby forms a rotationally secure connection for one rotation direction between the free-wheel member (6) and the hub member (2), **characterised in that** at least two pairings (4-3, 5-3) of saw-tooth tooth arrangements, which are engaged with each other, are provided, wherein each saw-tooth tooth arrangement comprises a set of saw-teeth arranged on a front side of the toothed disc.

2. Hub according to claim 1, wherein the two saw-tooth tooth arrangements of a pairing (4-3, 5-3) are phase-shifted relative to each other, i.e., the teeth of one arrangement are each positioned between two teeth of the other arrangement.

3. Hub according to claim 1 or 2, wherein an arrangement of three toothed discs (3, 4, 5) comprises two external toothed discs (4, 5) and one central toothed disc (3) which is arranged between the external toothed discs (4, 5), wherein the central toothed disc (3) has at each of the two front sides thereof a saw-tooth tooth arrangement and each of these two saw-tooth tooth arrangements is engaged with a corresponding saw-tooth tooth arrangement of one of the two external toothed discs (4, 5).

4. Hub according to claim 3, wherein the central toothed disc (3) is connected to the hub member (2) in a rotationally secure manner and the two external toothed discs (4, 5) are connected to the free-wheel member (6) in a rotationally secure manner.

5. Hub according to claim 3, wherein the central toothed disc (3) is connected to the free-wheel member (6) in a rotationally secure manner and the two external toothed discs (4, 5) are connected to the hub member (2) in a rotationally secure manner.

6. Hub according to claim 3, 4 or 5, wherein the two saw-tooth tooth arrangements of the central toothed disc (3) are phase-shifted relative to each other, i.e., the teeth of one arrangement are each positioned between two teeth of the other arrangement.

7. Hub according to any one of claims 1 to 6, wherein at least two pairings (4-3, 5-3) of saw-tooth tooth arrangements, which are engaged with each other, in opposite effective directions form a rotationally secure connection between the free-wheel member (6) and the hub member (2).

8. Hub according to any one of claims 1 to 7, wherein at least one toothed disc (3, 4, 5) can be axially displaced back and forth between two positions in order to produce the engagement of a pairing (4-3, 5-3) of saw-tooth tooth arrangements, which are engaged with each other, or to interrupt it.

9. Hub according to claim 8, wherein at least one restoring spring (15) acts in an axial direction on at least one toothed disc (3, 4, 5).

10. Hub according to any one of claims 1 to 9, wherein the free-wheel member (6) has a portion which is located outside the hub member (2) and which is rotatably supported on the axle (1) and has a portion which is located inside the hub member (2) and on which the hub member (2) is rotatably supported.

11. Hub according to claim 10, wherein the toothed discs (3, 4, 5) are arranged in the region of the portion, located inside the hub member (2), of the free-wheel member (6).

## Revendications

1. Moyeu, en particulier pour bicyclettes, comprenant un axe (1) sur lequel un élément de moyeu (2) et un élément de roue libre (6) sont montés de manière rotative, dans lequel l'élément de moyeu (2) et l'élément de roue libre (6) sont couplés l'un à l'autre par un mécanisme de roue libre qui repose sur une appariement de dispositions de dents en dents de scie, qui sont en prise les unes avec les autres, de disques dentés axialement adjacents et qui forme ainsi une liaison solidaire en rotation pour un sens de rotation entre l'élément de roue libre (6) et l'élément de moyeu (2), **caractérisé en ce qu'**au moins deux appariements (4-3, 5-3) de dispositions de dents en dents de scie, qui sont en prise l'une avec l'autre, sont prévues, dans lequel chaque disposition de dents en dents de scie comprend un ensemble de dents en dents de scie disposées sur une face avant du disque denté.

2. Moyeu selon la revendication 1, dans lequel les deux dispositions de dents en dents de scie d'un appariement (4-3, 5-3) sont déphasés l'une par rapport à l'autre, c'est-à-dire que les dents d'une disposition sont chacune positionnées entre deux dents de l'autre disposition.

3. Moyeu selon la revendication 1 ou 2, dans lequel un ensemble de trois disques dentés (3, 4, 5) comprend deux disques dentés externes (4, 5) et un disque denté central (3) qui est disposé entre les disques dentés externes (4, 5), dans lequel le disque denté central (3) présente, sur chacune de ses deux faces avant, une disposition de dents en dents de scie et chacun de ces deux dispositions de dents en dents de scie est en prise avec une disposition de dents en dents de scie correspondant de l'un des deux disques dentés externes (4, 5).

4. Moyeu selon la revendication 3, dans lequel le disque denté central (3) est relié à l'élément de moyeu (2) de manière solidaire en rotation et les deux disques dentés externes (4, 5) sont reliés à l'élément de roue libre (6) de manière solidaire en rotation.

5. Moyeu selon la revendication 3, dans lequel le disque denté central (3) est relié à l'élément de roue libre (6) de manière solidaire en rotation et les deux disques dentés externes (4, 5) sont reliés à l'élément de moyeu (2) de manière solidaire en rotation.

6. Moyeu selon la revendication 3, 4 ou 5, dans lequel les deux dispositions de dents en dents de scie du disque denté central (3) sont déphasés l'un par rapport à l'autre, c'est-à-dire que les dents d'une disposition sont chacune positionnées entre deux dents de l'autre disposition.

7. Moyeu selon l'une des revendications 1 à 6, dans lequel au moins deux appariements (4-3, 5-3) de dispositions de dents en dents de scie, qui sont en prise l'une avec l'autre, dans des directions effectives opposées forment une liaison solidaire en rotation entre l'élément de roue libre (6) et l'élément de moyeu (2).

8. Moyeu selon l'une des revendications 1 à 7, dans lequel au moins un disque denté (3, 4, 5) peut être déplacé axialement d'avant en arrière entre deux positions afin de produire l'engagement d'une appariement (4-3, 5-3) de disposition de dents en dents de scie, qui sont en prise l'une avec l'autre, ou de l'interrompre.

9. Moyeu selon la revendication 8, dans lequel au moins un ressort de rappel (15) agit dans une direction axiale sur au moins un disque denté (3, 4, 5).

10. Moyeu selon l'une des revendications 1 à 9, dans lequel l'élément de roue libre (6) comporte une partie qui est située à l'extérieur de l'élément de moyeu (2) et qui est supportée de manière rotative sur l'axe (1), et comporte une partie qui est située à l'intérieur de l'élément de moyeu (2) et sur laquelle l'élément de moyeu (2) est supporté de manière rotative.

11. Moyeu selon la revendication 10, dans lequel les disques dentés (3, 4, 5) sont disposés dans la région de la partie de l'élément de roue libre (6) située à l'intérieur de l'élément de moyeu (2).
